# EUROPEAN PATENT APPLICATION

(11) **EP 2 622 964 A1**
(43) Date of publication of application: **07.08.2013**
(21) Application number: 11791011.7
(22) Date of filing: 27.09.2011
(51) Int. Cl.: A23B 4/023, A23B 4/06, A23B 4/20, A23B 4/28, A23L 3/3508, A23L 1/318, A23L 1/325

(54) **FISH PROCESSING METHOD**

(30) Priority: 28.09.2010 ES 201031433
(71) Applicant: DISGROSSA, S.L., 03003 Alicante (ES)
(72) Inventor: ALBALADEJO GONZÁLEZ, José Ramón, E-30850 Totana (Murcia) (ES)
(74) Representative: Ungria López, Javier
(86) International application number: PCT/ES2011/070671
(87) International publication number: WO 2012/042086

(57) **Abstract**

The present invention relates to a fish treatment procedure characterized in that it comprises the following steps: (a) cutting the fish into clean loins, (b) cleaning the fish loins obtained in the previous step, (c) injecting at least one formulation into the clean fish loins, and (d) packaging the fish loins obtained in the previous step by using at least one thermoforming or vacuum packaging machine. Likewise, it is an object of the invention the formulation used in said procedure.

## Description

### Industrial field

The present invention relates to the field of food industry. More specifically, it refers to a process for treating and processing fish loins and, particularly, of blood line fish.

### State of the art prior to the invention

The fish is a main food in the diet, both for its high nutrient content, as for its beneficial health properties. However, as a result of this high percentage of nutrients, it is a highly perishable food, which entails the need of using a large number of additives in order to achieve its conservation for long periods of time. These additives have, in many cases, the disadvantage of interacting with components of the fish, thus altering the taste and/or physical characteristics.

Thus, there is a need for a new fish processing method that allows obtaining the fish without adding excess additives that alter its physical properties, as well as its natural look and/or organoleptic properties.

It is, therefore, an object of this invention, to present a new method for processing fish, the end product being a fish of the same high quality and with improved organoleptic properties, appearance, texture and flavor which resemble to those of the natural fish, therefore making it particularly attractive for its consumption.

It is also an additional object of this invention the use of a new formulation for treating the fish. This formulation is applied to the fish by injection or spraying process, this method being preferred over the immersion process by reducing the problem of external contamination by microorganisms, while providing a uniform distribution of the formulation on the surface of the fish.

Moreover, in the state of the art it is possible to find different methods for injecting the formulations and/or brine during the fish treatment procedure. For example, document EP0297592B1 describes a method for injecting liquid into a piece of food through needles, characterized in that variable amounts of liquid are injected depending on the different absorption characteristics in different parts of the food.

It is therefore an object of the invention to provide a process that allows an optimal distribution of the formulation by evenly injecting said formulation over the surface of the fish.

### Description of the invention

It is a first object of the present invention a procedure for treating the fish, characterized in that it comprises the following steps:
a) cutting the fish into clean loins;
b) cleaning the fish loins obtained in the previous step, preferably manually, in order to eliminate any damage that might have left after the previous cutting step;
c) injecting into the fish at least one formulation capable of improving its organoleptic properties and appearance, so that it preserves its optimal color for all the logistics and subsequent transport towards its final destination;
d) packaging the fish loins obtained in the previous step, preferably by using at least one thermoforming or vacuum packaging machine, in order to avoid any bacterial contamination. Preferably, the fish loins are placed in boxes with ice, in which are stored until reaching their final destination. By using said thermoforming or vacuum packaging machine, it is possible to additionally achieve the uniform distribution of the formulation injected in the previous step around the whole loin of the treated fish.

In principle, the above procedure can be used to treat any type of fish, but it is especially preferred in the case of blood line fish, such as any species of tuna, swordfish, yellowtail fish, etc. This type of fish tends to have a loin weight generally comprised between 3.5 and 6 kg. In the case of tuna, that such weight is usually between 3.5 and 5 kg, while the loin of swordfish usually weighs from 4 to 6 kg.

Preferably, the selected fish is used frozen and as a whole. Once the procedure begins, the fish is cut, preferably by using a manually or automatically saw, in order to obtain clean loins ready for their consumption by the end customer.

Also in a preferred embodiment in which frozen fish is used, after the cutting step and prior to the step of cleaning the fish loins, a further step of thawing is carried out. Preferably, this thawing step takes place within at least one chamber at a temperature preferably between 0 and 5°C and for a time preferably between 1 and 36 h, preferably between 4 and 36 h, more preferably about 24 h.

Later, before injecting the treatment formulation, it is possible to remove the skin and/or blood from the fish, depending on the type of fish selected for the process. In this way, for example, in the case of tuna, this can be presented both with skin and blood, and bloodless and skinless, while in the case of swordfish, this is preferably presented with skin and blood.

Once cut, thawed and cleaned, the fish is subjected to a step for injecting at least one formulation in order to improve its appearance and organoleptic properties. Preferably, this formulation is characterized in that it comprises:
- at least one natural extract, preferably selected from celery and other vegetables, preferably in a percentage by weight between 0.1% and 90%, preferably between 0.2% and 10%, and more preferably of 0.4%;
- sodium chloride or common salt, preferably in a percentage by weight between 0.1% and 90%, more preferably between 1% and 10%, and even more preferably of 1.7%;
- at least one antioxidant, preferably selected from a group consisting of sodium ascorbate (E-301), ascorbic acid (E-300) and sodium citrate (E-331 iii) and any combination thereof. Preferably, sodium ascorbate (E-301) is used in a percentage by weight between 0.1% and 90%, preferably between 0.1% and 10% and more preferably of 0.15%, ascorbic acid (E-300) is used in a percentage by weight between 0.1% and 90%, preferably between 0.2 and 10% and more preferably of 0.5% and sodium citrate (E-331 iii) is used in a percentage by weight between 0.1% and 90%, preferably between 0.05% and 10% and more preferably of 0.05%;
- water, preferably in a percentage until completing 100% by weight of the formulation.

In a preferred embodiment of the invention, the formulation may comprise a mixture of the following commercial compounds: Nadpre-ADB-Plus, in a percentage by weight between 0.5% and 95%, preferably of 0.6%, Bluefish, in a percentage by weight between 0.5% and 95%, preferably of 0.6%, and Merluzima in a percentage by weight between 0.5% and 95%, preferably of 0.6%.

Preferably, the injection of the formulation to fish is carried out by using at least one automatic injection molding machine, wherein the formulation is injected into the fish usually placed on a conveyor through a number of injection needles.

By using the procedure described above, it is possible to obtain a fish with an improved appearance and excellent organoleptic properties. Additionally, the procedure allows obtaining from 300 to 500 loins/hour.

Finally, it is an object of the invention the treated fish obtained from the described procedure, as well as the formulation used to improve the appearance and organoleptic properties of the fish.

### Preferred embodiment of the invention

Next is described, by way of example and in a not limiting manner, a preferred embodiment of the procedure object of the invention.

Thus, in one embodiment of the invention, the procedure begins once the fish to be treated is selected, which may consist of frozen and whole tuna, with a weight from approximately 30 to 300 kg. Said tuna is first subjected to a cutting process by using a manually or automatically saw, resulting in fish loins approximately between 3.5 and 5 kg. Next, the cut tuna loins are thawed in cooling chambers at a temperature of approximately 5°C and for a period approximately between 4 and 36 h. Once thawed, the manual cleaning of the fish loins is performed, in order to eliminate any damage that may remain after the cutting in the previous step.

Then the fish is introduced into an automatic injection machine which injects a formulation comprising the following ingredients:

| **Product** | **Dosage (wt%)** |
|---|---|
| Natural extract (celery and other vegetables) | 0.40 |
| Salt | 1.70 |
| Sodium ascorbate (E-301) | 0.15 |
| Ascorbic acid (E-300) | 0.50 |
| Sodium citrate (E-331 iii) | 0.05 |
| Water | 97.20 |

Finally, the treated fish is packaged by using a thermoforming or vacuum packaging machine, with the fish loins being introduced into boxes with ice, into which are stored until reaching their final destination.

## Claims

1. Fish treatment procedure **characterized in that** it comprises the following steps:
a) cutting the fish into clean loins;
b) cleaning the fish loins obtained in the previous step;
c) injecting at least one formulation into the clean fish loins;
d) packaging the fish loins obtained in the previous step by using at least one thermoforming or vacuum packaging machine.

2. Procedure, according to claim 1, wherein the used fish is a blood line fish.

3. Procedure, according to claim 1 or 2, wherein, when the used fish is frozen fish, the procedure comprises an additional step, after the cutting step (a) and prior to the cleaning step (b), wherein said additional step includes thawing the fish within at least one cooling chamber at a temperature between 0 and 5°C.

4. Procedure, according to any one of preceding claims, wherein the formulation injected in step (c) is **characterized in that** it comprises:
a) at least one natural extract, in a percentage by weight between 0.1% and 90%;
b) sodium chloride or common salt, in a percentage by weight between 0.1% and 90%;
c) at least one antioxidant, preferably selected from a group consisting of sodium ascorbate (E-301), ascorbic acid (E-300) and sodium citrate (E-331 iii) and any combination thereof.
d) water, in a percentage until completing 100% by weight of the formulation.

5. Procedure, according to claim 4, wherein the sodium ascorbate (E-301) is used in a percentage by weight between 0.1% and 90%, the ascorbic acid (E- 300) is used in a percentage by weight between 0.1% and 90%, and the sodium citrate (E-331 iii) is used in a percentage by weight between 0.1% and 90%.

6. Formulation for treating fish by a procedure according to any one of claims 1 to 5, **characterized in that** it comprises:
a) at least one natural extract, in a percentage by weight between 0.1% and 90%;
b) sodium chloride or common salt, in a percentage by weight between 0.1% and 90%;
c) at least one antioxidant, preferably selected from a group consisting of sodium ascorbate (E-301), ascorbic acid (E-300) and sodium citrate (E-331 iii) and any combination thereof.
d) water, in a percentage until completing 100% by weight of the formulation.

7. Formulation, according to claim 6, wherein the sodium ascorbate (E-301) is in a percentage by weight between 0.1% and 90%, the ascorbic acid (E-300) is in a percentage by weight between 0.1% and 90%, and the sodium citrate (E-331 iii) is in a percentage by weight between 0.1% and 90%.

8. Fish treated according to a procedure according to any one of claims 1 to 5.
